# EUROPÄISCHE PATENTSCHRIFT

(11) **EP 1 520 886 B1**
(45) Veröffentlichungstag und Bekanntmachung des Hinweises auf die Patenterteilung: **02.11.2006**
(21) Anmeldenummer: 04022488.3
(22) Anmeldetag: 22.09.2004
(51) Int. Cl.: C09D 11/02, C09D 11/06

(54) **Verwendung von Fettsäureestern auf Basis verzweigter Fettsäuren als Lösemittel für Druckfarben**
Use of fatty acid esters based on branched fatty acids as solvents for printing inks
Utilisation d'esters d'acides gras à base d'acides gras ramifiés pour encres d'imprimerie

(30) Priorität: 01.10.2003 US 507867 P
(43) Veröffentlichungstag der Anmeldung: 06.04.2005
(73) Patentinhaber: Cognis IP Management GmbH, 40589 Düsseldorf (DE)
(72) Erfinder: Höfer, Rainer, 40477 Düsseldorf (DE); Fies, Matthias, 47800 Krefeld (DE); Westfechtel, Alfred, 40724 Hilden (DE); Shah, Shailesh, Dresher, PA 19025 (US)

(56) Entgegenhaltungen:
- EP-A- 0 304 887
- DE-C- 19 954 830
- US-A- 5 336 313
- US-A- 5 340 493
- US-B1- 6 176 914
- PATENT ABSTRACTS OF JAPAN Bd. 0174, Nr. 68 (C-1102), 26. August 1993 (1993-08-26) & JP 5 112745 A (NISSHIN OIL MILLS LTD:THE), 7. Mai 1993 (1993-05-07)

## Beschreibung

### Gebiet der Erfindung

Die Erfindung betrifft die Verwendung von speziellen Fettsäureestern auf Basis verzweigter Fettsäuren als Lösemittel für Druckfarben.

### Stand der Technik

Um die unterschiedlichsten Arten von Druckerzeugnissen herzustellen, bedient man sich verschiedener Drucktechniken die sich in drei Hauptdruckarten einteilen lassen:
- den Hochdruck,
- den Flachdruck (oder auch Offsetdruck) sowie
- den Tiefdruck.

Beim Hochdruck erfolgt die Übertragung der Druckfarbe von harten, erhabenen Lettern, die durch Gummiwalzen mit einer dünnen Farbschicht bedeckt werden, auf das Substrat. Die Druckfarbe muß so beschaffen sein, daß sie relativ langsam trocknet und nicht vorzeitig auszuhärten beginnt. Für moderne, schnellaufende Zeitungsdruckmaschinen im Rotations-Hochdruckverfahren werden viskose, sehr langsam trocknende Druckfarben benötigt.

Beim Offsetdruck wird die abzubildende Gestalt in Form von Zonen gegensätzlicher Polarität auf Druckplatten fixiert. Die hydrophobe, viskose Druckfarbe benetzt nur die ebenfalls hydrophoben Bereiche auf den Druckplatten.

Beim Tiefdruckprozess wird das Motiv in die Druckplatte eingraviert. Nach dem Benetzen der Druckplatte mit der relativ dünnflüssigen Druckfarbe wird die Oberfläche abgestreift und es verbleibt nur noch Druckfarbe in den eingravierten Vertiefungen, von denen sie dann auf das zu bedruckende Substrat übertragen wird.

Die geschilderten Beispiele zeigen, daß Druckfarben eine Vielzahl an Anforderungen erfüllen müssen. Die Hauptbestandteile einer Druckfarbe sind Pigmente, Bindemittel, Lösungsmittel und Additive, mit denen die gewünschten Eigenschaften der Druckfarben verändert werden. Je nach Einsatz der Druckfarbe können so beispielsweise die Viskosität, das Fließverhalten und die Klebrigkeit eingestellt werden.

Die unterschiedlichen Anforderungen an die physikalischen Eigenschaften, insbesondere bei den Massendruckerzeugnissen stellen an das in der Druckfarbe verwendete Lösungsmittel hohe Anforderungen. Einerseits muss es in der Lage sein, die unterschiedlichsten Bindemittel (Harze) sowie verschiedene Zusätze zu lösen bzw. zu dispergieren, andererseits soll es eine Einstellung der Viskosität im gewünschten Bereich erlauben.

In der Vergangenheit wurden zunächst in hohem Maße - vorwiegend aus Preisgründen - Mineralöle als Lösemittel für Druckfarben eingesetzt. Dies vermochte aus einer Reihe von Gründen nicht zu befriedigen, so dass seit langem ein Bedarf besteht, Substitute für Mineralöle als Druckfarben-Lösemittel einzusetzen. Seit etwa einer Dekade sind im Stand der Technik verschiedentlich, wie nachfolgend noch dargestellt wird, gewisse Fettsäureester als Lösemittel für Druckfarben vorgeschlagen worden. Allerdings besteht auf diesem Gebiet nach wie vor ein permanenter Bedarf an neuen Entwicklungen.

Die Offenlegungsschrift **WO-A-90/03419** (Aarhus Oliefabrik) beschreibt die Verwendung von C₁₋₅-Estern aliphatischer C₈₋₂₂-Monocarbonsäuren zur Entfernung von Fett, Tinten und anderen Verunreinigungen von Druckmaschinen.

**JP-B2-3,317,512** (Nisshin Oil Mills) beschreibt Lösemittel für Flachdruck und Hochdruckfarben, die als Hauptbestandteil Fettsäuremonoester enthalten, deren Fettsäurebaustein 6-22 C-Atome und deren Alkoholbaustein 1-4 C-Atome enthält.

**US-A-5,104,567** (A/S Alaska Gruppen) beschreibt Reinigungsflüssigkeiten zur Entfernung von Druckfarben von Druckmaschinen, wobei diese Reinigungsflüssigkeiten ein pflanzliches Öl und einen Emulgator in Form eines Tensids enthält.

**WO-A-96/34920** (Henkel KGaA) beschreibt Lösemittel-Zusammensetzungen für Druckfarben. Die Zusammensetzungen enthalten (a) aromatenfreie Mineralöle, (b) Ester von C₈₋₂₂-Fettsäuren, und/oder (c) C₆₋₃₆-Fettalkohole.

**US-A-4,357,164** (Sakata Shokai Ltd.) beschreibt Druckfarbenzusammensetzungen enthaltend hochsiedende Lösungsmittel in Kombination mit Estern auf Basis von C₄₋₁₀₋Fettsäuren, Ölsäure und Elaidinsäure.

**US-A-5,122,188** (The United States of America) beschreibt Druckfarben auf Basis hitzebehandelter Öle, wobei die Hitzebehandlung zu Polymerisierungsprodukten mit einem Molgewicht oberhalb von 2600 führt.

**US-A-5,340,493** (R.J.Principato) beschreibt Reinigungszusammensetzungen, um Druckfarben von Maschinenteilen, die in der Druckindustrie eingesetzt werden, zu entfernen. Die ternären Zusammensetzungen enthalten Ester von Tallölfettsäuren, organische Lösungsmittel und Tenside.

**US-A-5,178,672** (Canadian Fine Color Company) beschreibt ein Trägermedium für pastenförmige Druckfarben, wobei dieses Trägermedium als Lösemittel Ester auf Basis pflanzlicher Fettsäuren und einfachen Alkoholen oder Glykolen enthält. Unter pflanzlichen Fettsäuren werden solche verstanden, die von Natur aus - also nicht durch weitere chemische Umwandlung bzw. Modifizierung - in Ölen pflanzlichen Ursprungs vorkommen. In Spalte 2, Zeilen 32-37 werden die Hauptvertreter der beschriebenen Klasse von Fettsäuren genannt. Dabei handelt es sich um gesättigte und olefinisch ungesättigte lineare Fettsäuren.

**US-A-5,427,615** (Arizona Chemical Comp.) beschreibt ein Verfahren zur Herstellung eines gelförmigen Druckfarbenzusammensetzung, wobei als Lösemittel ein Fettsäureester zum Einsatz kommt (Schritt B). Der Fettsäurebaustein des Esters umfasst C₈₋₂₄₋Fettsäuren und der Alkoholbaustein Alkohole oder Glykole mit 1-10 C-Atomen mit der Maßgabe, dass die Fettsäure aus Ölen stammt, die in Leinsamenöl, Sojaöl und Rapsöl vorkommen.

**US-A-5,173,113** (Topez Comp.) beschreibt Druckfarbenzusammensetzungen, die als funktionelle Bestandteile Di- bzw. Oligoester olefinisch ungesättigter Fettsäuren und Di - bzw. multifunktionelle Acrylatester enthalten.

**US-A-5,713,990** (The United States of America) beschreibt Druckfarbenzusammensetzungen auf Basis einer ternären Mischung: (1) ein Harz oder hitzebehandeltes (und damit polymerisiertes) Öl, (2) ein nicht-hitzebehandeltes pflanzliches Öl und (3) mindestens ein Fettsäureester auf Basis ungesättigter Fettsäuren, insbesondere Linolsäure und Linolensäure. Die Komponente (3) ist dabei in untergeordneten Mengen enthalten.

**US-B-6,176,914**. beschreibt Lösemittel für Druckfarben enthalten a) aromatenfreie Mineralöle, b) Ester von C8-22-Fettsäuren und c) C6-36-Fettalköhohole. Bei den estern b) kann es sich um Isopalmitinsäureester handeln.

**EP-A-304,887** beschreibt komplexe Druckfarbenzusammensetzungen enthaltend a) Fettsäuremonoester aliphatischerAlkohole, b) Fettsäuretriglyceride, c) bei Raumtemperatur flüssige höhere aliphatischen Kohlenwasserstoffe, und d) polyoxyalkylierte Phosphorsäureester.

### Beschreibung der Erfindung

Wie dem Fachmann bekannt haben Lösemittel in Druckfarben in der Regel verschiedene Funktionen. Zunächst lösen bzw. dispergieren sie die Hauptkomponenten der Druckfarbe, insbesondere Pigmente und Bindemittel (Harze). Gleichzeitig gewährleisten sie den Transport der Druckfarbe aus dem Vorratsbehälter auf die Druckrollen und das zu bedruckende Substrat. In diesem Zusammenhang sind die Lösemittel in der Fachwelt gelegentlich auch als Trägermedium oder Trägeröle für Druckfarben bezeichnet worden, vergleiche z.B. Welt der Farben, Nr. 5/1997, Seiten 11-18. Wenn im Rahmen der vorliegenden Erfindung wie allgemein üblich von Lösemitteln für Druckfarben gesprochen wird, sind diese Zusammenhänge mit umfasst.

Gegenstand der vorliegenden Anmeldung ist die Verwendung von Zusammensetzungen enthaltend
a) Ester auf Basis linearer Fettsäuren,
b) Ester auf Basis verzweigter Fettsäuren, wobei Isostearinsäure als Fettsäurebaustein der Ester b) ausgenommen ist
c) Ester auf Basis von Fettsäuren mit alicyclischen Strukturelementen und
d) Ester auf Basis von Fettsäuren mit aromatischen Strukturelementen als Lösemittel für Druckfarben,
wobei folgende Maßgaben gelten:
- Unter Estern auf Basis linearer Fettsäuren a) werden solche Ester verstanden, deren Fettsäurebausteine insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester linear und aliphatisch sind;
- unter Estern auf Basis verzweigter Fettsäuren b) werden solche Ester verstanden, deren Fettsäurebausteine Fettsäuren mit insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester gesättigte und/oder ein- oder mehrfach olefinisch ungesättigte Fettsäuren sind und eine verzweigte Struktur aufweisen;
- unter Estern auf Basis von Fettsäuren mit alicyclischen Strukturelementen c) werden solche Ester verstanden, deren Fettsäurebausteine, insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester einen alicyclischen Rest enthalten, der gegebenenfalls durch einen aliphatischen Rest substituiert,sein kann;
- unter Estern auf Basis von Fettsäuren mit aromatischen Strukturelementen d) werden solche Ester verstanden, deren Fettsäurebausteine gesättigte und/oder ein- oder mehrfach olefinisch ungesättigte Fettsäuren mit insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester einen Arylrest enthalten, der gegebenenfalls durch einen aliphatischen Rest substituiert sein kann.
   Im Rahmen der vorliegenden Erfmdung sind diejenigen Ester als Lösemittel bevorzugt, die bei 20 °C von flüssiger Konsistenz sind.

### Fettsäurebausteine der Ester

In einer Ausführungsforrn sind die Fettsäurebausteine der Ester auf Basis verzweigter Fettsäuren gesättigte und/oder und/oder ein- oder mehrfach olefinisch ungesättigte verzweigte Fettsäuren mit insgesamt 18 C-Atomen, wobei Isostearinsäure als Fettsäurebaustein der Ester ausgenommen ist. Vorzugsweise weisen dabei die Fettsäurebausteine dieser Ester überwiegend Methylverzweigungen auf; Isoölsäure ist dabei besonders bevorzugt:

Isoölsäure ist beispielsweise erhältlich, indem man aus Monomerfettsäure, die wie unten beschrieben im Zuge der Herstellung von Dimerfettsäure anfällt, Stearinsäure abtrennt, und anschließend destilliert.

### Alkoholbausteine der Ester

Bei den Alkoholbausteinen der Ester sind gesättigte Monoalkohole mit insgesamt 1 bis 12 C-Atomen bevorzugt. Diese können gesättigt oder ungesättigt, geradkettig oder verzweigt sein. Ganz besonders geeignet als Alkoholbausteine der Ester sind Methanol, Ethanol, n-Propanol, iso-Propanol, n-Butanol, iso-Butanol und 2-Etylhexanol.

### Weitere Ausführungsformen

Vorzugsweise werden die genannten Zusammensetzungen in Form der Ester der sogenannten Monomerfettsäuren eingesetzt.. Dabei handelt es sich um kommerziell erhältliche Produkte, beispielsweise Emery 935 (früher: Aliphat 47) der Anmelderin. Die Herstellung von Monomerfettsäuren ist im Abschnitt "Monomerfettsäuren" beschrieben. Bzgl. der genannten Komponenten der Zusammensetzung gilt folgendes:
- Unter Estern auf Basis linearer Fettsäuren werden solche Ester verstanden, deren Fettsäurebausteine insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester linear und aliphatisch sind. Aus dieser Klasse von Verbindungen sind Stearinsäureester besonders bevorzugt.
- Unter Estern auf Basis verzweigter Fettsäuren werden solche Ester verstanden, deren Fettsäurebausteine Fettsäuren mit insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester gesättigte und/oder ein- oder mehrfach olefinisch ungesättigte Fettsäuren sind und eine verzweigte Struktur aufweisen. Als Fettsäurebaustein ist Isoölsäure bevorzugt.
- Unter Estern auf Basis von Fettsäuren mit alicyclischen Strukturelementen werden solche Ester verstanden, deren Fettsäurebausteine insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester einen alicyclischen Rest, vorzugsweise einen Cyclohexylrest, enthalten, der gegebenenfalls durch einen aliphatischen Rest substituiert sein kann. Sofern der alicyclische Rest substituiert ist, handelt es sich bei dem Substituenten vorzugsweise um einen Alkylsubstituenten, insbesondere einen gesättigten Alkylrest, der geradkettig oder verzweigt sein kann, mit insgesamt 1 bis 8 C-Atomen.
- Unter Estern auf Basis von Fettsäuren mit aromatischen Strukturelementen werden solche Ester verstanden, deren Fettsäurebausteine gesättigte und/oder ein- oder mehrfach olefinisch ungesättigte Fettsäuren mit insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester einen Arylrest enthalten, der gegebenenfalls durch einen aliphatischen Rest substituiert sein kann. Der Arylrest kann (als Substituent) an sich an einer beliebigen Stelle der Fettsäurekette sitzen. Bei dem Arylrest handelt es sich vorzugsweise um einen Phenylrest. Sofern der Arylrest substituiert ist, handelt es sich bei dem Substituenten vorzugsweise um einen Alkylsubstituenten, insbesondere einen gesättigten Alkylrest, der geradkettig oder verzweigt sein kann, mit insgesamt 1 bis 8 C-Atomen.

### Monomerfettsäure

Wie dem Fachmann bekannt handelt es sich bei Dimerfettsäuren um Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind in dem Produktgemisch auch geringe Anteile an Monomeren (die Summe der Monomeren im Rohgemisch der Dimerfettsäuren bezeichnet der Fachmann als Monomerfettsäuren) sowie an höheren Oligomeren, insbesondere an sogenannten Trimerfettsäuren, enthalten. Dimerfettsäuren sind handelsübliche Produkte und werden in verschiedenen Zusammensetzungen und Qualitäten angeboten (z. B. unter der Markenbezeichnung Empol® der Anmelderin).

Die im Gemisch zur Herstellung von Dimerfettsäuren nach Durchführung der Reaktion enthaltenen - und daraus durch destillative Verfahren erhältliche - monomeren Verbindungen werden vom Fachmann wie bereits gesagt üblicherweise als Monomerfettsäuren bezeichnet. In diesem Zusammenhang sei darauf hingewiesen, dass der Begriff der Monomerfettsäuren dem Fachmann bekannt ist, vergl. z.B. den die Seiten 770 und 771 überbrückenden Absatz im Kapitel "Dimer Acids" des Standardwerkes **Kirk-Othmer, Encyclopedia of Chemical Technology, 3rd edition, Vol. 7 (1979).**

Bei den Monomerfettsäuren handelt es sich nicht um nicht umgesetztes Ausgangsmaterial des Prozesses zur Herstellung von Dimerfettsäuren, sondern um Produkte einer Sekundärreaktion, mit geringen Anteilen an nicht umgesetztem Ausgangmaterial. Die Sekundärreaktion führt dabei zu einer strukturellen Modifizierung der eingesetzten Fettsäuren.

Die Zusammensetzung der Monomerfettsäuren unterliegt insbesondere im Hinblick auf die Natur der bei der Herstellung der Dimerfettsäuren eingesetzten Ausgangsmaterialien gewissen Schwankungen. So ist beispielsweise der Gehalt der Monomerfettsäuren an Verbindungen mit aromatischen Strukturelementen dann besonders ausgeprägt, wenn überwiegend Linolsäure als Ausgangsstoff eingesetzt wird.

Im Rahmen der vorliegenden Erfindung sind Ester auf Basis solcher Monomerfettsäuren besonders bevorzugt, die im Zuge der Herstellung von Dimerfettsäuren, bei denen als Ausgangsstoffe entweder Ölsäure oder Linolsäure oder ein Gemisch von Ölsäure und Linolsäure (z.B. in Form der sogenannten Tallölfettsäuren) eingesetzt wurde, erhältlich sind.

### Beispiele

### Meßmethoden

**Kauri-Butanol-Wert:** Zur Bestimmung der Lösekraft von Druckfarbenharzen wird vom Fachmann häufig der sogenannte Kauri-Butanol-Wert herangezogen. Dabei handelt es sich um eine Kennziffer für das Lösevermögen flüssiger Lösemittel. Das Prinzip der Methode besteht darin, eine definierte Menge einer gesättigten Lösung von Kaurikopal in n-Butanol mit dem zu untersuchenden Lösemittel bis zur deutlichen Trübung zu titrieren. Die verbrauchte Menge an Lösemittel in ml ist der Kauri-Butanol-Wert. Typische Kauri-Butanol-Werte sind:
- für aromatenfreie Mineralöle ca. 20
- für Mineralöle mit ca. 50% Aromatengehalt ca. 50
- für Toluol 105
   Die Messungen der Kauri-Butanol-Werte wurden im Rahmen der vorliegenden Erfindung nach ASTM D 1133 durchgeführt.

**Harzlösungs-Viskosität:** Eine weitere Methode zur Beurteilung der Lösekraft besteht in der Bestimmung der Viskosität von Harzlösungen. Hierzu wurden 50 Gew.-% ige Lösungen von Sylvaprint MP 6348 (Harz der Fa. Arizona Chemicals) in den Monomerfettsäureestern gemäß den Beispielen 1 bis 4 hergestellt und die Brookfield-Viskosität bei 25 °C und Spindel 1 bei 2 upm bestimmt. Der Messwert ist bei Kennzahlen der Produkte gemäß den Beispielen 1 bis 4 jeweils als "Harzlösungs-Viskosität" angegeben.

**DSC-Siedetemperatur:** Weiter ist das Abdampfverhalten von Interesse. Die Siedetemperatur der Ester gemäß den Beispielen 1 bis 4 wurde durch DSC (different scanning calorimetry) bestimmt (vergleiche hierzu: D. Tilinsky, H. Puderbach: "Experiences with the use of DSC in the Determination ofVapor Pressure of Organic Compounds" in J. Thermal Analysis 35 (1989), S. 503 - 513).

**TGA-Wert:** Neben der oben genannten Bestimmung der DSC-Siedetemperatur gibt auch die Thermogravimetrie Informationen über das Abdampfverhalten. Die (isotherme) Thermogravimetrie ist eine Methode, bei der die Abnahme der Masse durch Evaporation eines zu untersuchenden Solvens als Funktion der Zeit gemessen wird. Bei der Messung der TGA-Werte wurde eine definierte Menge eines Monomerfettsäureesters (25 mg) gemäß den Beispielen 1 bis 4 in eine offenes Gefäß eingewogen (= 100%) und bei einer Temperatur von 150 °C (Luftatmosphäre bei 3 l/h) gehalten. Nach 60, 120 und 180 Minuten wurde gewogen, wie viel Substanz noch vorhanden war. Diese Menge wurde in % der ursprünglich eingewogenen Substanz ausgedrückt.

### Tack:

Der Tack wurde bei 400 m/min und 23°C einem Tack-o-scope gemessen.

### Misting:

Das Misting wurde mit einem Tack-o-scope (2,6ml; 26°C; 500 m/min; 3 min) durchgeführt. Die Beurteilung erfolgte visuell.

### Farbdichte:

Die Farbdichte wurde bei 1,5 g/m² mit einem x-Rite Gerät bestimmt.

### Gloss:

Der Gloss wurde mit ein Byk-Gardner Trigloss auf weißem Kontrastpapier (Erichsen Prüfkarten) bei 1,5 g/m² und 60° bestimmt.

### Setting Speed:

Die Setting Speed wurde visuell bestimmt.

### Herstellung der Monomerfettsäureester

### Beispiel 1: Monomerfettsäure-2-Ethylhexylester

### Apparatur:

2 Liter Rührapparatur, Wasserabscheider, Stickstoff-Strom

### Ausführung:

438 g (1,5 mol) Monomerfettsäure (Aliphat 34 R ; MG = 292,2; Säurezahl = 192) und 234 g (1,8 mol) Alkohol (2-Ethylhexanol; MG = 130) wurden vorgelegt und auf 240 °C aufgeheizt. 0,32 g Katalysator (Zinn-II-Oxid) wurde während der Aufheizphase bei 180 °C zugegeben. Die Dephlegmator-Temperatur betrug ca. 110 - 120 °C. Bei Erreichen einer Säurezahl unterhalb von 10 wurde Vakuum angelegt und stufenweise innerhalb von etwa 3 Stunden auf 500 mbar gebracht. Es wurde weitergerührt, bis die gewünschte niedrige Säurezahl erreicht war. Der Überschuß an eingesetztem Alkohol wurde bei etwa 50 mbar abdestilliert, bis der 2-Ethylhexanolgehalt imProdukt unterhalb von 0,1 % betrug. Der Monomerfettsäureester wurde überdestilliert. Anschließend wurde er bei bei 120 °C und Vakuum getrocknet. Nun ließ man auf etwa 50 °C abkühlen und filtrierte unter Einsatz eines Filterhilfsmittels.

### Das Produkt wies folgende Kennzahlen auf:

Säurezahl = 0,4
Verseifungszahl = 137
Hydroxylzahl = 0,2
Jodzahl = 53
Brookfield-Viskosität in Substanz bei 25 °C und Spindel 4 bei 50 upm : 15,0 mPas
Kauri-Butanol-Wert = 41
Harzlösungs-Viskosität = > 1.000.000 mPas
DSC-Siedepunkt = Probe zersetzte sich bei 300 °C
TGA-Werte: 91 (nach 60 Minuten); 82 (nach 120 Minuten); 74 (nach 180 Minuten)

### Beispiel 2: Monomerfettsäure-iso-Butylester

### Apparatur:

2 Liter Rührapparatur, Wasserabscheider, Stickstoff-Strom

### Ausführung:

438 g (1,5 mol) Monomerfettsäure (Aliphat 34 R; MG = 292,2; Säurezahl = 192) und 0,26 g Katalysator (Fascat 2001; Handelsprodukt der Fa. Unichema) wurden auf 240 °C aufgeheizt. Anschließend wurden innerhalb von 5 Stunden 122 g (1,8 mol) Alkohol (i-Butanol) zugetropft, zugetropft, wobei darauf geachtet wurde, daß die Temperatur nie unter 220 °C fiel. Die Säurezahl betrug am Ende dieser Zeit 5. Es wurde eine weitere Stunde bei 240 °C nachgerührt, wobei die Säurezahl auf einen Wert von 3,5 fiel. Dann wurde für weitere 3,5 Stunden bei 240 °C nachgerührt, wobei die Säurezahl auf einen Wert von 1,8 fiel. Nun wurde unter folgenden Bedingungen destilliert: Fraktion 1 wurde bei einer Sumpftemperatur von 151-165°C, einer Brüdentemperatur von 85-148 °C und einem Druck von 0,5-0,3 mbar erhalten, dabei fielen 31 g an. Fraktion 2 (Hauptlauf) wurde bei einer Sumpftemperatur von 165-175°C, einer Brüdentemperatur von 148-160°C und einem Druck von 0,3 mbar erhalten, dabei fielen 412 g an. Fraktion 2 war von fast wasserklarer Farbe. Es verblieb ein Rückstand von 51 g

Das Produkt (= Hauptlauf) wies folgende Kennzahlen auf:
Säurezahl = 1,0
Verseifungszahl = 158
Hydroxylzahl = 0,3
Jodzahl = 59
Brookfield-Viskosität in Substanz bei 25 °C und Spindel 4 bei 100 upm: 10,2 mPas
Kauri-Butanol-Wert = 50
Harzlösungs-Viskosität = 930.000 mPas
DSC-Siedepunkt = 350 °C
TGA-Werte: 49 (nach 60 Minuten); 21 (nach 120 Minuten); 14 (nach 180 Minuten)

### Beispiel 3: Monomerfettsäure-isopropylester

### Apparatur:

2 Liter Rührapparatur, Wasserabscheider, Stickstoff-Strom

### Ausführung:

438 g (1,5 mol) Monomerfettsäure (Aliphat 34 R; MG = 292,2; Säurezahl = 192) und 0,26 g Katalysator (Fascat 2001) wurden auf 240 °C aufgeheizt. Anschließend wurden innerhalb von 5 Stunden 112 g (1,8 mol) Alkohol (Isopropanol) zugetropft, wobei darauf geachtet wurde, daß die Temperatur nie unter 220 °C fiel. Die Säurezahl betrug am Ende dieser Zeit 5. Anschließend wurde für 5 Stunden bei 240 °C und dann für weitere 3,5 Stunden bei 250 °C nachgerührt. Schließlich wurde analog zu Beispiel 2 destilliert. Das gewünschte Produkt (der Hauptlauf) war ebenfalls von fast wasserklarer Farbe.

### Das Produkt wies folgende Kennzahlen auf:

Säurezahl = 9,5
Verseifungszahl = 163
Hydroxylzahl = 15,9
Jodzahl = 66
Brookfield-Viskosität in Substanz bei 25 °C und Spindel 4 bei 50 upm: 9,6 mPas
Kauri-Butanol-Wert = 61
Harzlösungs-Viskosität = 644.000 mPas
DSC-Siedepunkt = 370 °C
TGA-Werte: 76 (nach 60 Minuten); 58 (nach 120 Minuten); 44 (nach 180 Minuten)

### Beispiel 4: Monomerfettsäure-methylester

100 kg (312 mol) Monomerfettsäure (Emery 935, Handelsprodukt der Fa. Cognis Corp. / USA; Säurezahl = 175) wurde aufgeschmolzen und mit 11,7 kg (127 mol) Glycerin und 33,5 g Katalysator (Fascat 2001) unter Stickstoff erhitzt und das gebildete Reaktionswasser bei 180 - 240 °C abdestilliert. Sobald die Säurezahl der Mischung unter 10 gefallen war, wurde im Wasserstrahlvakuum bei 200 °C erhitzt, bis die Säurezahl weniger als 1 betrug. Das so hergestellte Glycerid wurde mit 12 kg (375 mol) Methanol und 2 kg einer 30-Gew.%-igen Lösung von Natriummethanolat in Methanol versetzt und 2 Stunden bei 70 °C unter Stickstoff gerührt. Danach wurde zur Phasentrennung etwa 30 Minuten stehengelassen und dann die Glycerinphase abgetrennt. Zwecks Nachveresterung wurde dann nach Zugabe von 1,8 kg (56 mol) Methanol noch eine Stunde bei 70 °C gerührt. Anschließend wurden 0,35 kg einer 85-Gew.%-igen wässrigen Lösung von Phosphorsäure zugesetzt und überschüssiges Methanol im Vakuum abdestilliert. Um restliches Glycerin und Salze zu entfernen, wurde der Ansatz mit etwa 100 kg heißem Wasser etwa 15 Minuten lang gerührt, etwa 30 Minuten absitzen gelassen und die wässrige Phase abgetrennt. Die Wäsche wurde dann in gleicher Weise wiederholt. Das Produkt wurde dann im Strahlervakuum getrocknet und anschließend destilliert. Dabei wurde bei 1 mbar bis 180 °C Sumpftemperatur zunächst ein Vorlauf von 2% genommen und dann der gewünschte Methylester als Hauptlauf bei einer Temperatur bis 200 °C überdestilliert. Man erhielt 88 kg eines hellgelben, klaren Produktes.

### Das Produkt wies folgende Kennzahlen auf:

Säurezahl = 0,9
Verseifungszahl = 182
Hydroxylzahl = 0,5
Jodzahl = 71
Brookfield-Viskosität in Substanz bei 25 °C und Spindel 4 bei 100 upm: 8,4 mPas
Kauri-Butanol-Wert = 66
Harzlösungs-Viskosität = 340.000 mPas
DSC-Siedepunkt = Probe zersetzte sich bei 300 °C
TGA-Werte: 52 (nach 60 Minuten); 16 (nach 120 Minuten); 4 (nach 180 Minuten)

### Rezepturen

### Varnish

38 g Setaprint P 7000 (Fa. Akzo Resins), 10 g Setalin V 405 (Fa. Akzo Resins) und 52 g des Monomerfettsäureesters gemäß Beispiel 3 wurden zusammengegeben und dann innig vermengt.

### Die Mischung wies folgende Kennzahlen auf:

Brookfield-Viskosität bei 23°C und 10 s⁻¹: 62 Pa·s
Brookfield-Viskosität bei 23°C und 50 s⁻¹: 46 Pa·s
Tack (400 m/min bei 23°C) = 8,0

### Pigmentkonzentrat

76 g des Varnish der oben beschriebenen Zusammensetzung wurden mit 24 g Permanent Yellow GRX 82 (Fa. Hoechst) zusammengegeben und die Mischung innig vermengt.

### Offset-Druckfarbe

50 g des Pigmentpigmentkonzentrates der oben angegebenen Zusammensetzung wurden mit 47 g des Vamish der oben beschriebenen Zusammensetzung sowie 3 g des Monomerfettsäureesters gemäß Beispiel 3 zusammengegeben und die Mischung innig vermengt.

Dementsprechend enthielten 100 g der so hergestellten Offsetfarbe:
12 g Permanent Yellow GRX 82
32,3 g Setaprint P 7000
8,5 g Setalin V 405
47,2 g Monomerfettsäureesters gemäß Beispiel 3

### Diese Druckfarbe wies folgende Merkmale auf:

Brookfield-Viskosität bei 23°C und 10 s⁻¹ = 140 Pa·s
Brookfield-Viskosität bei 23°C und 50 s⁻¹ = 90 Pa·s
Tack (400 m/min bei 23°C) = 9,3
Flow = gut
Misting (2,6ml; 26°C; 500 m/min; 3 min) = sehr gering
Density (bei 1,5 g/m²) = 1,77
Gloss (bei 1,5 g/m² and 60 °C) = 82
Setting Speed = schnell

## Patentansprüche

1. Verwendung von Zusammensetzungen enthaltend
a) Ester auf Basis linearer Fettsäuren,
b) Ester auf Basis verzweigter Fettsäuren, wobei Isostearinsäure als Fettsäurebaustein der Ester b) ausgenommen ist
c) Ester auf Basis von Fettsäuren mit alicyclischen Strukturelementen und
d) Ester auf Basis von Fettsäuren mit aromatischen Strukturelementen als Lösemittel für Druckfarben,
wobei folgende Maßgaben gelten:
• Unter Estern auf Basis linearer Fettsäuren a) werden solche Ester verstanden, deren Fettsäurebausteine insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester linear und aliphatisch sind;
• unter Estern auf Basis verzweigter Fettsäuren b) werden solche Ester verstanden, deren Fettsäurebausteine Fettsäuren mit insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester gesättigte und/oder ein- oder mehrfach olefinisch ungesättigte Fettsäuren sind und eine verzweigte Struktur aufweisen;
• unter Estern auf Basis von Fettsäuren mit alicyclischen Strukturelementen c) werden solche Ester verstanden, deren Fettsäurebausteine insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester einen alicyclischen Rest enthalten, der gegebenenfalls durch einen aliphatischen Rest substituiert sein kann;
• unter Estern auf Basis von Fettsäuren mit aromatischen Strukturelementen d) werden solche Ester verstanden, deren Fettsäurebausteine gesättigte und/oder ein-oder mehrfach olefinisch ungesättigte Fettsäuren mit insgesamt 12 bis 22 C-Atomen und deren Alkoholbausteine gesättigte und/oder ein- oder mehrfach olefinisch ungesättigte Monoalkohole mit insgesamt 1 bis 22 C-Atomen sind, mit der zusätzlichen Maßgabe, dass die Fettsäurebausteine der Ester einen Arylrest enthalten, der gegebenenfalls durch einen aliphatischen Rest substituiert sein kann.

2. Verwendung nach Anspruch 1, wobei es sich bei den Zusammensetzungen enthaltend die Komponenten a) bis d) um Ester von Monömerfettsäuren handelt.

3. Verwendung nach Anspruch 1 oder 2, wobei die Alkoholbausteine der Ester ausgewählt werden aus der Gruppe Methanol, Ethanol, n-Propanol, iso-Propanol, n-Butanol, iso-Butanol und 2-Ethylhexanol.

## Claims

1. The use of compositions containing
a) esters based on linear fatty acids,
b) esters based on branched fatty acids, isostearic acid being excluded as the fatty acid constituent of the esters b),
c) esters based on fatty acids with alicyclic structural elements and
d) esters based on fatty acids with aromatic structural elements
as solvents for printing inks, with the following provisos:
• esters based on linear fatty acids a) are understood to be esters of which the fatty acid constituents contain a total of 12 to 22 carbon atoms and of which the alcohol constituents are saturated and/or mono- or polyolefinically unsaturated monoalcohols containing a total of 1 to 22 carbon atoms, with the additional proviso that the fatty acid constituents of the esters are linear and aliphatic;
• esters based on branched fatty acids b) are understood to be esters of which the fatty acid constituents are fatty acids containing a total of 12 to 22 carbon atoms and of which the alcohol constituents are saturated and/or mono- or polyolefinically unsaturated monoalcohols containing a total of 1 to 22 carbon atoms, with the additional proviso that the fatty acid constituents of the esters are saturated and/or mono- or polyolefinically unsaturated fatty acids and have a branched structure.
• esters based on fatty acids containing alicyclic structural elements c) are understood to be esters of which the fatty acid constituents contain a total of 12 to 22 carbon atoms and of which the alcohol constituents are saturated and/or mono- or polyolefinically unsaturated monoalcohols containing a total of 1 to 22 carbon atoms, with the additional proviso that the fatty acid constituents of the esters contain an alicyclic group which may optionally be substituted by an aliphatic group.
• Esters based on fatty acids containing aromatic structural elements d) are understood to be esters of which the fatty acid constituents are saturated and/or mono- or polyolefinically unsaturated fatty acids containing a total of 12 to 22 carbon atoms and of which the alcohol constituents are saturated and/or mono- or polyolefinically unsaturated monoalcohols containing a total of 1 to 22 carbon atoms, with the additional proviso that the fatty acid constituents of the esters contain an aryl group which may optionally be substituted by an aliphatic group.

2. The use claimed in claim 1, **characterized in that** the compositions containing components a) to d) are esters of monomer fatty acids.

3. The use claimed in claim 1 or 2, **characterized in that** the alcohol constituents of the esters are selected from the group consisting of methanol, ethanol, n-propanol, isopropanol, n-butanol, isobutanol and 2-ethylhexanol.

## Revendications

1. Utilisation de compositions contenant :
(a) des esters à base d'acides gras linéaires,
(b) des esters à base d'acides gras ramifiés, l'acide isostéarique étant exclu en tant que composant acide gras des esters b),
(c) des esters à base d'acides gras ayant des éléments structurels alicycliques et
(d) des esters à base d'acides gras ayant des éléments structurels aromatiques
en tant que solvant pour encres d'imprimerie, étant précisé que :
• par esters à base d'acides gras linéaires a), on entend les esters dont les composants acides gras comportent au total 12 à 22 atomes de C et dont les composants alcools sont des monoalcools saturés et/ou à insaturation mono- ou polyoléfinique comportant 1 à 22 atomes de C, étant en outre précisé que les composants acides gras des esters sont linéaires et aliphatiques ;
• par esters à base d'acides gras ramifiés b), on entend des esters dont les composants acides gras sont des acides gras comportant au total 12 à 22 atomes de C et dont les composants alcools sont des monoalcools saturés et/ou à insaturation mono ou polyoléfinique comportant au total 1 à 22 atomes de C étant précisé en outre que les composants acides gras des esters sont des acides gras saturés et/ou à insaturation mono- ou polyoléfinique et présentent une structure ramifiée ;
• par esters à base d'acides gras ayant des éléments structurels alicycliques c) on entend des esters dont les composants acides gras comportent au total 12 à 22 atomes de C et dont les composants alcools sont des monoalcools saturés et/ou à insaturation mono ou polyoléfinique comportant 1 à 22 atomes de C, étant précisé en outre que les composants acides gras des esters contiennent un radical alicyclique qui peut être substitué, le cas échéant, par un radical aliphatique ;
• par esters à base d'acides gras comportant des éléments structurels aromatiques d), on entend des esters dont les composants acides gras sont des acides gras saturés et/ou à insaturation mono- ou polyoléfinique comportant au total 12 à 22 atomes de C et dont les composants alcools sont des monoalcools saturés et /ou à insaturation mono ou polyoléfinique comportant au total 1 à 22 atomes de C étant précisé en outre que les composants acides gras des esters contiennent un radical aryle qui peut être substitué, le cas échéant, par un radical aliphatique.

2. Utilisation selon la revendication 1, dans laquelle les compositions contenant les composants a) à d) sont des esters d'acides gras monomères.

3. Utilisation selon la revendication 1 ou 2, dans laquelle les composants alcools des esters sont choisis dans le groupe méthanol, formé par l'éthanol, le n-propanol, l'iso-propanol, le n-butanol, l'iso-butanol et le 2-éthylhexanol.
